# EUROPÄISCHE PATENTSCHRIFT

(11) **EP 0 699 274 B1**
(45) Veröffentlichungstag und Bekanntmachung des Hinweises auf die Patenterteilung: **28.02.2001**
(21) Anmeldenummer: 95913012.1
(22) Anmeldetag: 09.03.1995
(51) Int. Cl.: F02M 37/08

(54) **KRAFTSTOFFPUMPE**
FUEL PUMP
POMPE A CARBURANT

(30) Priorität: 18.03.1994 DE 9404601 U
(43) Veröffentlichungstag der Anmeldung: 06.03.1996
(73) Patentinhaber: ROBERT BOSCH GMBH, 70442 Stuttgart (DE)
(72) Erfinder: LUEDTKE, Ulrich, D-76227 Karlsruhe (DE)
(86) Internationale Anmeldenummer: DE9500326
(87) Internationale Veröffentlichungsnummer: WO9525885

(56) Entgegenhaltungen:
- DE-A- 2 262 569
- US-A- 4 350 909
- US-A- 4 694 211
- US-A- 5 013 222
- Patent Abstracts of Japan, Band 8, Nr 149(E-255); & JP,A,5953064 (NIHON SAABO K.K.), 1984-03-27

## Beschreibung

Die Erfindung geht aus von einem Aggregat zum Fördern von Kraftstoff aus einem Vorratsbehälter zu einer Brennkraftmaschine nach der Gattung des Anspruchs 1.

Ein solches Aggregat ist durch die DE-OS 22 62 569 bekannt. Dieses Aggregat weist eine Förderpumpe und einen Elektromotor zum Antrieb eines Förderelements der Förderpumpe auf. Der Elektromotor weist einen Läufer auf, mit einem Anker und einem an einem Ende angeordneten Plankommutator. Der Anker und der Plankommutator sind teilweise mit einer Umhüllung aus Kunststoff umspritzt. Der Plankommutator besteht aus mehreren Segmenten, die elektrisch leitend mit dem Anker verbunden sind und durch sich entlang der Längsachse des Läufers erstreckende Schlitze voneinander getrennt sind. Die Umhüllung erstreckt sich in Richtung der Längsachse des Läufers nur soweit, daß die Schlitze zwischen den Segmenten des Plankommutators nicht von ihr bedeckt sind. Würden die Schlitze ebenfalls von der Umhüllung bedeckt, so könnte nicht ausgeschlossen werden, daß bei der Herstellung der Umhüllung flüssiger Kunststoff in die Schlitze eindringen würde und dadurch die Funktionsfähigkeit des Läufers in Frage gestellt wäre. Die Umhüllung ist erforderlich, um den durch die Drehbewegung des Ankers in flüssigem Medium hervorgerufenen Leistungsverlust des Elektromotors gering zu halten und/oder um den Anker vor elektrochemischer Korrosion zu schützen, die beispielsweise beim Betrieb des Aggregats in Alkohol auftreten würde.

Es ist üblich, die Anschlußdrähte zur Verbindung des Plankommutators mit dem Anker an der äußeren Mantelfläche der Segmente anzubringen. Im Interesse einer möglichst kurz bauenden Ausführung des Aggregats wird der Plankommutator in Richtung seiner Längsachse so kurz ausgeführt, daß die Verbindungsstellen der Anschlußdrähte näher an die Stirnfläche des Plankommutators heranreichen als der Schlitzgrund. Bei der Ausbildung der Umhüllung wie vorstehend beschrieben wären die Verbindungsstellen der Anschlußdrähte an den Segmenten des Plankommutators nicht von der Umhüllung bedeckt und daher nicht geschützt und an diesen würde elektrochemische Korrosion auftreten, was zu deren Zerstörung führen würde.

### Vorteile der Erfindung

Das erfindungsgemäße Aggregat mit den Merkmalen des Anspruchs 1 hat demgegenüber den Vorteil, daß auch die Verbindungsstellen der Anschlußdrähte an den Segmenten des Plankommutators von der Umhüllung umschlossen und somit geschützt sind, wobei sichergestellt ist, daß bei der Herstellung der Umhüllung kein flüssiger Kunststoff in die Schlitze eindringen kann. Die Umhüllung kann dabei in vorteilhafter Weise in einem in einer Längsmittelebene des Läufers geteilten Spritzgießwerkzeug hergestellt werden. Dies ermöglicht eine einfache Entformung des Läufers und die gleichzeitige Herstellung der Umhüllung für mehrere Läufer in einem Spritzgießwerkzeug.

In den abhängigen Ansprüchen sind vorteilhafte Ausgestaltungen und Weiterbildungen der Erfindung angegeben.

### Zeichnung

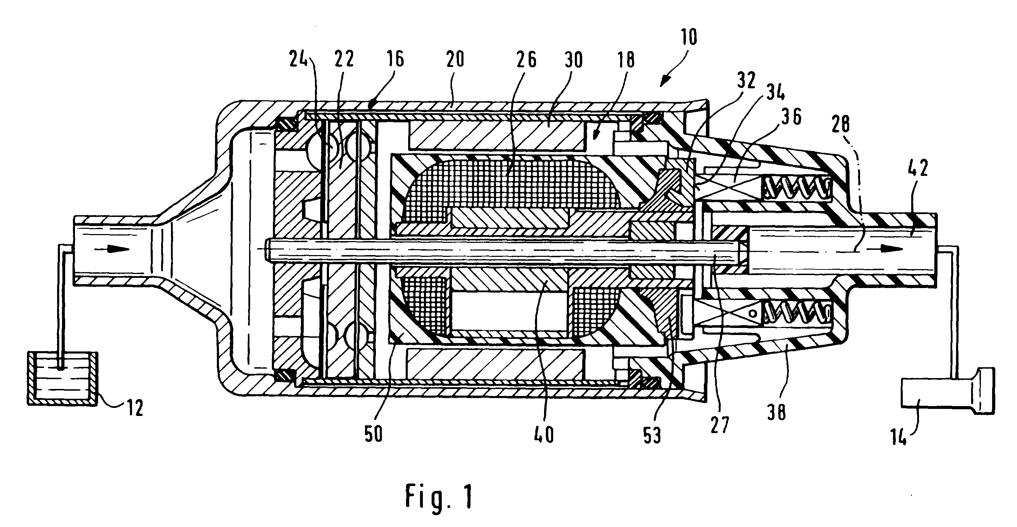

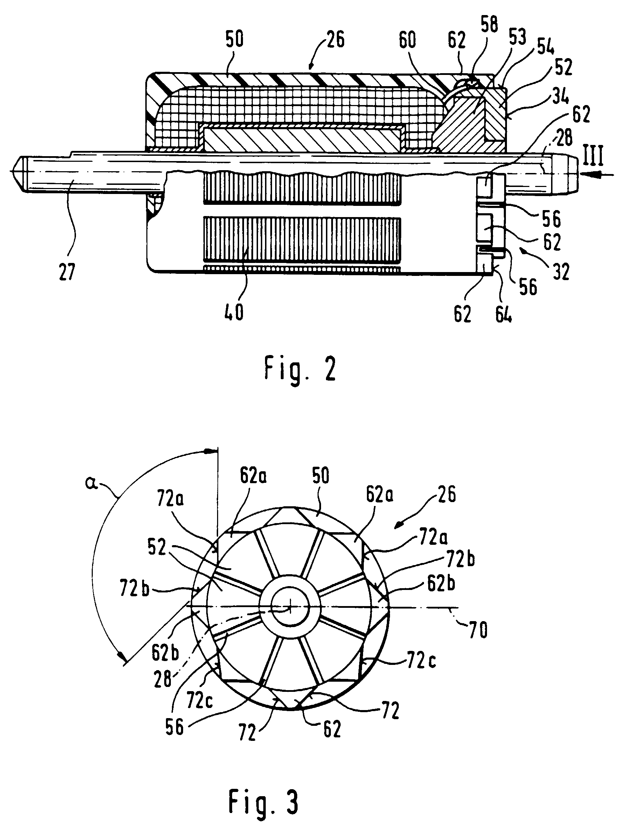

Ein Ausführungsbeispiel der Erfindung ist in der Zeichnung dargestellt und in der nachfolgenden Beschreibung näher erläutert. Es zeigen Figur 1 ein Aggregat zum Fördern von Kraftstoff aus einem Vorratsbehälter zur Brennkraftmaschine teilweise in einem Längsschnitt, Figur 2 in vergrößerter Darstellung einen Läufer des Aggregats von Figur 1 und Figur 3 den Läufer in der Ansicht in Pfeilrichtung III in Figur 2.

### Beschreibung des Ausführungsbeispiels

In Figur 1 ist ein Aggregat 10 zum Fördern von Kraftstoff aus einem Vorratsbehälter 12 zur Brennkraftmaschine 14 eines Kraftfahrzeugs dargestellt. Das Aggregat 10 kann beispielsweise im Vorratsbehälter 12 angeordnet sein. Das Aggregat 10 weist eine Förderpumpe 16 und einen Elektromotor 18 zum Antrieb der Förderpumpe 16 auf. Die Förderpumpe 16 und der Elektromotor 18 sind in einem Gehäuse 20 nebeneinander angeordnet. Die Förderpumpe 16 weist ein Förderelement 22 auf, das beispielsweise als ein Laufrad ausgebildet sein kann. das über seinem Umfang mit Flügeln versehen ist und das in einer Pumpenkammer 24 umläuft. Der Elektromotor 18 weist einen Läufer 26 auf, mit einer Welle 27, über die er um seine Längsachse 28 drehbar gelagert ist und mit der das Förderelement 22 der Förderpumpe 16 in Drehrichtung verbunden ist. Im Gehäuse 20 sind über den Umfang des Läufers 26 verteilt Magnetsegmente 30 angeordnet.

Der Läufer 26 weist an seinem der Förderpumpe 16 abgewandten Ende einen Plankommutator 32 auf, an dessen sich senkrecht zur Längsachse 28 des Läufers 26 erstreckender Stirnfläche 34 Bürsten 36 anliegen, die in einem das Gehäuse 20 verschließenden Deckel 38 angeordnet sind. Der Plankommutator 32 ist mit Wicklungen des Ankers 40 verbunden, die ein Teil des Läufers 18 sind. Während des Betriebs des Aggregats 10 wird das Förderelement 22 durch den Elektromotor 16 umlaufend angetrieben, so daß durch dieses Kraftstoff gefördert wird, der den Elektromotor 18 durchströmt und durch einen Auslaß 42 im Deckel 38 das Aggregat 10 verläßt und weiter zur Brennkraftmaschine 14 gelangt.

In Figur 2 ist der Läufer 26 vergrößert dargestellt, wobei oberhalb der Längsachse 28 eine Schnittdarstellung und unterhalb der Längsachse 28 eine Ansicht gezeigt ist. Der Läufer 26 ist im Bereich des Ankers 40 und bis an den Rand des Plankommutators 32 mit einer Umhüllung 50 aus Kunststoff umspritzt. Die Mantelflächen der Blechpakete des Ankers 40, die von den Magnetsegmenten 30 umgeben sind, sind von der Umhüllung 50 nicht bedeckt. Der Plankommutator 32 besteht aus mehreren Segmenten 52, beim Ausführungsbeispiel acht Segmenten, die auf einem Träger 53 angeordnet sind. Die Mantelflächen 54 der Segmente 52 sind etwa auf einem Kreiszylinder angeordnet und die Stirnflächen 34 der Segmente 52 bilden in einer Ebene senkrecht zur Längsachse 28 des Läufers 26 etwa eine Kreisfläche. Die Segmente 52 sind durch parallel zur Längsachse 28 des Läufers 26 verlaufende Schlitze 56 voneinander getrennt, die sich bis zum Träger 53 erstrecken. An der Mantelfläche 54 jedes Segments 52 steht an deren zum Anker 40 weisenden Endbereich ein Haken 58 nach außen ab, der etwa u-förmig gebogen ist und dessen freies Ende sich etwa parallel zur Längsachse 28 vom Anker 40 wegweisend erstreckt. An jedem Haken 58 ist das Ende wenigstens eines Anschlußdrahts 60 der Wicklung des Ankers 40 eingeklemmt. Die Schlitze 56 erstrecken sich ausgehend von der Stirnfläche des Plankommutators 32 entlang der Längsachse 28 etwa bis auf Höhe der freien Enden der Haken 58 oder über diese hinaus zum Anker 40 hin.

Die Umhüllung 50 weist eine etwa kreiszylindrische Außenform auf und endet in Richtung der Längsachse 28 in den Umfangsbereichen des Läufers 26, in denen die Schlitze 56 vorhanden sind, vor dem Grund der Schlitze 56, so daß diese nicht von der Umhüllung 50 bedeckt sind. Im Bereich der Schlitze 56 endet die Umhüllung 50 am Träger 53. Zwischen den Schlitzen 56 weist die Umhüllung 50 Abschnitte 62 auf, die sich in Richtung der Längsachse 28 so weit erstrecken, daß die Haken 60 vollständig von den Abschnitten 62 der Umhüllung 50 umgeben sind. Die Abschnitte 62 erstrecken sich auch über den Umfang der Segmente 52 des Plankommutators 32 so weit, daß die Haken 60 vollständig von der Umhüllung sind. Die Mantelflächen der Abschnitte 62 der Umhüllung 50 sind auf demselben Kreiszylinder angeordnet, wie der übrige Teil der Umhüllung 50. Die vom Anker 40 wegweisenden Stirnflächen 64 der Abschnitte 62 erstrecken sich etwa senkrecht zur Längsachse 28. Die Übergänge zwischen den Stirnflächen 64 und den Mantelflächen der Abschnitte 62 sind gerundet.

In Figur 3 ist der Läufer 26 in der Ansicht in Richtung der Längsachse 28 dargestellt. Der Läufer 26 weist eine die Längsachse 28 enthaltende Längsmittelebene 70 auf, die durch die Mitte zweier einander diametral gegenüberliegender Segmente 52 verläuft. Die über den Umfang der Segmente 52 angeordneten Abschnitte 62 der Umhüllung 50 sind alle gleich ausgebildet. Die Haken 60 und die diese umschließenden Abschnitte 62 der Umhüllung 50 sind in Umfangsrichtung gesehen mittig auf den Segmenten 52 angeordnet. Die über den Umfang des Läufers 26 einander zugewandten Seitenflächen 72 der Abschnitte 62 sind so angeordnet, daß sie in Richtungen senkrecht zur Längsmittelebene 70 von dieser weg keine Hinterschneidungen bilden. Die Seitenflächen 72 der Abschnitte 62 können eben oder gewölbt ausgebildet sein. Bei der in Figur 3 oberhalb der Längsmittelebene 70 dargestellten Ausführung erstrecken sich die Seitenflächen 72a der Abschnitte 62a, die an die Abschnitte 62b anschließend angeordnet sind, durch die die Längsmittelebene 70 verläuft, die den Seitenflächen 72b der Abschnitte 62b, durch die die Längsmittelebene 70 verläuft, zugewandt sind, senkrecht zur Längsmittelebene 70. Die Seitenflächen 72c können jedoch auch, wie in Figur 3 unterhalb der Längsmittelebene 70 dargestellt, so angeordnet sein, daß sie mit zunehmendem Abstand von der Längsmittelebene 70 zu einer senkrecht zur Längsmittelebene 70 durch den Läufer 26 verlaufenden weiteren Mittelebene 74 hin verlaufen. Durch den Läufer 26 können weitere Längsmittelebenen gelegt werden, die jeweils durch die Mitte zweier einander gegenüberliegender Segmente 52 verlaufen, wobei die Seitenflächen 72 der Abschnitte 62 auch in Richtungen senkrecht zu diesen Längsmittelebenen von diesen weg keine Hinterschneidungen aufweisen. Beim dargestellten Ausführungsbeispiel mit acht Segmenten 52 sind die Seitenflächen 72 der Abschnitte 62 eben ausgebildet und jeweils zwei einander zugewandte Seitenflächen 72 zweier benachbarter Abschnitte 62 schließen zwischen sich einen Winkel a von etwa 135 Grad ein.

Zur Herstellung der Umhüllung wird der Läufer 26 in ein nicht dargestelltes Spritzgießwerkzeug eingelegt, das in der Längsmittelebene 70 geteilt ist. Eine Entformung des Läufers 26 aus dem Werkzeug ist einfach möglich, da die Umhüllung in Entnahmerichtung des Läufers senkrecht von der Längsmittelebene 70 weg keine Hinterschneidungen aufweist.

## Patentansprüche

1. Aggregat zum Fördern von Kraftstoff aus einem Vorratsbehälter zu einer Brennkraftmaschine, mit einem Elektromotor (18), der einen Läufer (26) aufweist, welcher einen Anker (40) und einen Plankommutator (32) aufweist, die zumindest teilweise mit einer Umhüllung (50,62) aus Kunststoff umspritzt sind, wobei der Plankommutator (32) aus mehreren Segmenten (52) besteht, die voneinander durch sich entlang der Längsachse (28) des Läufers (26) erstreckende Schlitze (56) getrennt sind und mit dem Anker (40) verbunden sind, wobei sich die Umhüllung (50) in Richtung der Längsachse (28) des Läufers (26) so weit erstreckt, daß die Schlitze (56) nicht von ihr bedeckt sind, dadurch gekennzeichnet, daß an den Mantelflächen (54) der Segmente (52) Anschlußdrähte (60) zur Verbindung mit dem Anker (40) angebracht sind, daß die Umhüllung (50) sich in Richtung der Längsachse (28) des Läufers (26) über den Grund der Schlitze (56) so weit hinauserstreckende Abschnitte (62) aufweist, daß durch diese die Anschlußdrähte (60) bedeckt sind und daß die Abschnitte (62) so ausgebildet sind, daß sie in Richtungen senkrecht zu einer die Längsachse (28) des Läufers (26) enthaltenden Längsmittelebene (70) von dieser weg keine Hinterschneidungen aufweisen.

2. Aggregat nach Anspruch 1, dadurch gekennzeichnet, daß die Segmente (52) jeweils einen u-förmig gebogenen, nach außen abstehenden Haken (58) aufweisen, an dem die Anschlußdrähte (60) angebracht sind und daß durch die Abschnitte (62) der Umhüllung (50) die Anschlußdrähte (60) und die Haken (58) bedeckt sind.

3. Aggregat nach Anspruch 1 oder 2, dadurch gekennzeichnet, daß die Abschnitte (62) der Umhüllung (50) etwa parallel zur Längsachse (28) des Läufers (26) verlaufen.

4. Aggregat nach einem der Ansprüche 1 bis 3, dadurch gekennzeichnet, daß die Längsmittelebene (70) durch zwei einander diametral gegenüberliegende Abschnitte (62b) verläuft.

5. Aggregat nach Anspruch 4, dadurch gekennzeichnet, daß sich die Seitenflächen (72a) der an die Abschnitte (62b), durch die die Längsmittelebene (70) verläuft, anschließenden Abschnitte (62a), die den Seitenflächen (72b) der Abschnitte (62b), durch die die Längsmittelebene (70) verläuft, zugewandt sind, etwa senkrecht zur Längsmittelebene (70) erstrecken.

6. Aggregat nach Anspruch 4, dadurch gekennzeichnet, daß sich die Seitenflächen (72a) der an die Abschnitte (62b), durch die die Längsmittelebene (70) verläuft, anschließenden Abschnitte (62a), die den Seitenflächen (72b) der Abschnitte (62b), durch die die Längsmittelebene (70) verläuft, zugewandt sind, mit zunehmendem Abstand von der Längsmittelebene (70) zu einer weiteren, zur Längsmittelebene (70) senkrechten Mittelebene (74) hin verlaufend erstrecken.

## Claims

1. Assembly for feeding fuel out of a supply tank to an internal combustion engine, with an electric motor (18) having a rotor (26) which has an armature (40) and a plane commutator (32) which have a plastic casing (50, 62) at least partially injection-moulded around them, the plane commutator (32) consisting of a plurality of segments (52) which are separated from one another by slots (56) extending along the longitudinal axis (28) of the rotor (26) and are connected to the armature (40), the casing (50) extending in the direction of the longitudinal axis (28) of the rotor (26) to an extent such that the slots (56) are not covered by said casing, characterized in that junction wires (60) for connection to the armature (40) are attached to the outer surfaces (54) of the segments (52), in that the casing (50) has portions (62) which extend in the direction of the longitudinal axis (28) of the rotor (26) over the bottom of the slots (56) to an extent such that the junction wires (60) are covered by these portions, and in that the portions (62) are designed in such a way that they have no undercuts in directions perpendicular to a longitudinal mid-plane (70) containing the longitudinal axis (28) of the rotor (26) and away from said longitudinal mid-plane.

2. Assembly according to Claim 1, characterized in that the segments (52) each have an outwardly projecting hook (58) which is bent in a U-shaped manner and to which the junction wires (60) are attached, and in that the junction wires (60) and the hooks (58) are covered by the portions (62) of the casing (50).

3. Assembly according to Claim 1 or 2, characterized in that the portions (62) of the casing (50) run approximately parallel to the longitudinal axis (28) of the rotor (26).

4. Assembly according to one of Claims 1 to 3, characterized in that the longitudinal mid-plane (70) runs through two portions (62b) located diametrically opposite one another.

5. Assembly according to Claim 4, characterized in that the lateral surfaces (72a) of the portions (62a) adjoining the portions (62b) through which the longitudinal mid-plane (70) runs and facing the lateral surfaces (72b) of the portions (62b) through which the longitudinal mid-plane (70) runs extend approximately perpendicularly to the longitudinal mid-plane (70).

6. Assembly according to Claim 4, characterized in that the lateral surfaces (72a) of the portions (62a) adjoining the portions (62b) through which the longitudinal mid-plane (70) runs and facing the lateral surfaces (72b) of the portions (62b) through which the longitudinal mid-plane (70) runs extend, at an increasing distance from the longitudinal mid-plane (70), towards a further mid-plane (74) perpendicular to the longitudinal mid-plane (70).

## Revendications

1. Ensemble servant à transférer du carburant à partir d'un réservoir de stockage vers un moteur à combustion interne, comprenant un moteur électrique (18), un rotor (26), qui présente un induit (40) et un collecteur plat (32), entourés au moins en partie d'une enveloppe (50, 62) par injection de matière plastique, le collecteur plat (32) se composant de plusieurs segments (52) qui sont séparés les uns des autres par des fentes (56), s'étendant le long de l'axe longitudinal (28) du rotor et qui sont reliées à l'induit (40), l'enveloppe (50) s'étendant dans le sens de l'axe longitudinal (28) du rotor (26) jusqu'à l'endroit où les fentes ne sont pas recouvertes par elle,
caractérisé en ce que
• des fils de raccordement (60) sont mis pour assurer la liaison avec l'induit (40) sur les faces d'enveloppement (54) des segments (52) ,
• l'enveloppe (50) présente dans le sens de l'axe longitudinal (28) du rotor (26) des sections (62) s'étendant sur le fond des fentes (56) jusqu'à l'endroit où les fils de raccordement (60) sont recouverts par celles-ci et,
• les sections (62) sont constituées de telle sorte qu'elles ne présentent pas dans des directions perpendiculaires à un plan médian longitudinal (70), contenant l'axe longitudinal (28) du rotor (26), des contre-dépouilles s'éloignant de celui-ci.

2. Ensemble selon la revendication 1,
caractérisé en ce que
• les segments (52) présentent respectivement un crochet (58) se dressant vers l'extérieur, replié en forme d'un, crochet sur lequel sont mis les fils de raccordement (60), et
• les fils de raccordement (60) et les crochets (58) sont recouverts par les sections (62) de l'enveloppe (50).

3. Ensemble selon la revendication 1 ou 2,
caractérisé en ce que
les sections (62) de l'enveloppe (50) s'étendent à peu près parallèlement à l'axe longitudinal (28) du rotor (26).

4. Ensemble selon l'une quelconque des revendications 1 à 3,
caractérisé en ce que
le plan médian longitudinal (70) s'étend à travers deux sections (62b) se faisant diamétralement vis à vis.

5. Ensemble selon la revendication 4,
caractérisé en ce que
les faces latérales (72a) des sections (62a) qui se raccordent aux sections (62b) à travers lesquelles passe le plan médian longitudinal (70), et qui sont tournées vers les faces latérales (72b) des sections (62b), s'étendent à peu près perpendiculairement au plan médian longitudinal (70).

6. Ensemble selon la revendication 4,
caractérisé en ce que
les faces latérales (72a) des sections (62a) qui se raccordent aux sections (62b) à travers lesquelles passe le plan médian longitudinal (70), et qui sont tournées vers les faces latérales (72b) des sections (62b), s'étendent avec une distance croissante par rapport au plan médian longitudinal (70) en direction d'un autre plan médian (74) perpendiculaire au plan médian longitudinal (70).
